# EUROPÄISCHE PATENTSCHRIFT

(11) **EP 2 671 819 B1**
(45) Veröffentlichungstag und Bekanntmachung des Hinweises auf die Patenterteilung: **06.08.2014**
(21) Anmeldenummer: 13163654.0
(22) Anmeldetag: 15.04.2013
(51) Int. Cl.: B65D 77/02, B65D 81/02, B65D 81/05, B65D 85/00

(54) **Verpackung von polykristallinen Silicium und Verfahren zu dieser Verpackung**
Packing of polycrystalline silicon and method for this packaging
Emballage de silicium polycristallin ainsi que le procédé pour cet emballage

(30) Priorität: 17.04.2012 DE 102012206251
(43) Veröffentlichungstag der Anmeldung: 11.12.2013
(73) Patentinhaber: Wacker Chemie AG, 81737 München (DE)
(72) Erfinder: Mattes, Joachim, 84489 Burghausen (DE); Lichtenegger, Bruno, 84547 Emmerting (DE); Vietz, Matthias, 5230 Mattighofen (AT)
(74) Vertreter: Killinger, Andreas

(56) Entgegenhaltungen:
- EP-A1- 1 334 907
- EP-A2- 2 030 905
- JP-A- 2009 208 827

## Beschreibung

Die Erfindung betrifft die Verpackung von polykristallinem Silicium nach dem Oberbegriff des Anspruchs 1, wie sie aus der EP 2 030 905 A bekannt ist.

Polykristallines Silicium (Polysilicium) wird überwiegend mittels des Siemensverfahrens aus Halogensilanen wie Trichlorsilan abgeschieden und anschließend möglichst kontaminationsarm in polykristalline Siliciumbruchstücke zerkleinert.

Für Anwendungen in der Halbleiter- und Solarindustrie ist ein möglichst wenig kontaminierter Polysiliciumbruch erwünscht. Daher sollte das Material auch kontaminationsarm verpackt werden, bevor es zum Kunden transportiert wird.

Schlauchbeutelmaschinen, die zur Verpackung von Siliciumbruch prinzipiell geeignet sind, sind kommerziell erhältlich. Eine entsprechende Verpackungsmaschine ist beispielsweise in DE 36 40 520 A1 beschrieben.

Bei Polysiliciumbruch handelt es sich um ein scharfkantiges, nicht rieselfähiges Schüttgut. Daher ist bei der Verpackung darauf zu achten, dass das Material die üblichen Kunststoffbeutel beim Befüllen sowie beim Verpacken, beim Transport und beim Entpacken nicht durchstößt oder im schlimmsten Fall sogar vollständig zerstört, zumal dies mit einer Kontamination des polykristallinen Siliciums einhergehen würde.

Um Probleme beim Befüllen in Kunststoffbeutel zu verhindern, sind die kommerziellen Verpackungsmaschinen zum Zwecke der Verpackung von Polysilicium in geeigneter Weise zu modifizieren.

DE 10 2007 027 110 A1 offenbart ein Verfahren zur Verpackung von polykristallinem Silicium, bei dem polykristallines Silicium mittels einer Abfüllvorrichtung in einen frei hängenden, fertig geformten, Beutel gefüllt wird, wobei der gefüllte Beutel anschließend verschlossen wird, **dadurch gekennzeichnet, dass** der Beutel aus hochreinem Kunststoff mit einer Wanddicke von 10 bis 1000 µm besteht, wobei die Abfüllvorrichtung einen frei hängenden Energieabsorber aus einem nichtmetallischen kontaminationsarmen Werkstoff umfasst, der vor Einfüllen des polykristallinen Silicium in den Kunststoffbeutel eingeführt wird und über den das polykristalline Silicium in den Kunststoffbeutel eingefüllt wird, und der frei hängende Energieabsorber anschließend aus dem mit polykristallinem Silicium gefüllten Kunststoffbeutel entfernt wird und der Kunststoffbeutel verschlossen wird.

Durch ein solches Verfahren, welches einen Energieabsorber innerhalb des Kunststoffbeutels vorsieht, können Durchstoßungen des Kunststoffbeutels während des Verpackens weitgehend verhindert werden. Dies gilt aber nur für kleine bzw. leichte Bruchstücke.

Es hat sich gezeigt, dass sich das Risiko für Beutelverletzungen proportional zur Bruchstückmasse verstärkt.

Eine prinzipiell denkbare Möglichkeit, die Durchstoßrate durch eine dickere Beutelfolie zu reduzieren, hat sich als wenig praktikabel erwiesen, zumal eine derartige weniger biegsame Folie schwer handhabbar wäre.

Solche Durchstoßungen des Beutels können jedoch nicht nur während der Verpackung, sondern auch beim Transport zum Kunden auftreten. Polysiliciumbruch ist scharfkantig, so dass bei ungünstiger Orientierung der Bruchstücke im Beutel durch Relativbewegung bzw. Druck der Bruchstücke zur bzw. auf die Beutelfolie diese durchschnitten bzw. durchstoßen werden.

Aus der Beutelverpackung herausstehende Bruchstücke können direkt durch umgebende Materailen, innenliegende Bruchstücke durch einströmende Umgebungsluft inakzeptabel kontaminiert werden.

Diesbezüglich sind im Stand der Technik keine Lösungen bekannt.

Aus dieser Problematik ergab sich die Aufgabenstellung der Erfindung.

Die Aufgabe der Erfindung wird mit der Verpackung von Polykristallinem Silicium gemäß Anspruch 1 gelöst.

Weiterhin wird die Aufgabe gelöst durch Verpacken der zuvor erwähnten Verpackung von polykristallinem Silicium durch Verschweißen wenigstens einer der Folien und anschließendem Einbringen in einen Transportbehälter umfassend Trennelemente oder Kartons.

Außerdem wird die Aufgabe gelöst durch Verpacken jener Verpackung von polykristallinem Silicium durch Einbringen in einen Karton und anschließendem Verschweißen wenigstens einer der Folien.

Schließlich wird die Aufgabe auch gelöst durch ein Verfahren zur Verpackung von polykristallinem Silicium in Form von Bruchstücken oder stabförmigen Rundlingen, wobei jeweils wenigstens eine Folie in einen quaderförmigen, den Abmessungen des zu verpackenden polykristallinen Siliciums angepassten Karton gesteckt, das polykristalline Silcium in die wenigstens eine Folie eingeführt wird, wobei die wenigstens eine, 10 bis 1000 µm dicke Folie anschließend verschweißt wird und das polykristalline Silicium umschlingt, wobei diese wenigstens eine Folie von einer weiteren Folie mit einer Verstärkungsstruktur oder von einem formbildenden Element umgeben ist.

Weitere Gegenstände der Erfindung sind die Verwendung von Rolamit^{®} zur Stabilisierung der Verpackung von polykristallinem Silicium, das in Form eines Bruchstücks oder eines stabförmigen Rundlings vorliegt, welches von wenigstens einer 10 bis 1000 µm dicken Folie, die das polykristalline Silicium umschlingt, umgeben ist, sowie die Verwendung von Stretchfolie oder Wickelfolie oder Schrumpffolie zur Stabilisierung der Verpackung von polykristallinem Silicium, das in Form eines Bruchstücks oder eines stabförmigen Rundlings vorliegt, welches von wenigstens einer 10 bis 1000 µm dicken Folie, die das polykristalline Silicium umschlingt, umgeben ist, sowie die Verwendung von keilförmigen Elementen zur Stabilisierung der Verpackung von polykristallinen Silicium, wobei sich das polykristalline Silicium in wenigstens einer Folie befindet und sich die wenigstens eine Folie enthaltend polykristallines Silicium in einem Karton befindet, wobei sich die keilförmigen Elemente an eine Oberseite des Kartons und/oder an eine Seitenwand des Kartons und an die wenigstens Folie enthaltend polykristallines Silicium anschmiegen.

Die Erfindung basiert auf einer durchstoß- und schnitthemmenden Verpackung durch einen zusätzlich einbrachten stabilisierenden Beutel mit Verstärkungsstruktur, durch den die Bruchstücke dauerhaft fixiert bleiben.

Das Befüllen der Verpackungsbeutel erfolgt idealer weise direkt in einem umgebenden Kartonbehältnis, wodurch neben der schützenden Wirkung der Kartonwände auch eine hohe Packungsdichte erreicht wird.

Typischer Weise werden Silizumbruchstücke in dünnwandige (Foliendicke 30-500µm) biegsame Einfach- oder Mehrfachbeutel verpackt. Bevorzugt ist die Verwendung von Doppelbeuteln.

Die Erfindung betrifft Polykristallines Silicium in Form eines oder mehrerer Bruchstücke oder eines stabförmigen Rundlings, umgeben von wenigstens einer 10 bis 1000 µm dicken Folie, die das Bruchstück oder den stabförmigen Rundling umschlingt, wobei diese wenigstens eine Folie von einer weiteren Folie mit einer Verstärkungsstruktur umgeben ist.

Bei den Bruchstücken handelt es sich vorzusgweise um Bruchstücke jeweils mit einem Gewicht von wenigstens 50 g.

Es kann sich auch um ein Bruchstück oder um einen stabförmigen Rundling mit einem Gewicht von größer oder gleich 2 kg.

Wie zuvor erwähnt, betrifft die Erfindung ein Verfahren zur Verpackung von polykristallinem Silicium in Form von Bruchstücken oder stabförmigen Rundlingen, wobei jeweils wenigstens eine Folie in einen quaderförmigen, den Abmessungen des zu verpackenden polykristallinen Siliciums angepassten Karton gesteckt, das polykristalline Silcium in die wenigstens eine Folie eingeführt wird, wobei die wenigstens eine, 10 bis 1000 µm dicke Folie anschließend verschweißt wird und das polykristalline Silicium umschlingt, wobei diese wenigstens eine Folie von einer weiteren Folie mit einer Verstärkungsstruktur oder von einem formbildenden Element umgeben ist.

Die Folie mit einer Verstärkungsstruktur schützt das Bruchstück gegen mechanische Einwirkungen.

Vorzugsweise handelt es sich bei der Folie mit Verstärkungsstruktur um eine Luftpolsterfolie oder um eine Rolamit^{®}-Folie.

Rolamit^{®} ist eine eingetragene Marke der Fa. Pavag Folien AG, Schweiz.

Statt einer Folie mit Verstärkungsstruktur kann ein Form bildendes Element vorgesehen sein. Das Form bildende Element kann aus PU, z.B. PU-Schaum, oder aus Polyester bestehen. Ebenso eignet sich expandierbares Polystyrol.

Die inneren Folien sind vorzugsweise verschweißt. Die Folie mit Verstärkungsstruktur kann ebenfalls verschweißt sein, was jedoch nicht zwingend erforderlich ist.

Zur Stabilisierung der inneren Folie kann Stretchfolie oder Wickelfolie oder Schrumpffolie verwendet werden. Dies kann vor oder nach dem Verschweißen der inneren Folie vorgesehen sein.

Die in Folie verschweißten Bruchstücke werden in einen Transportbehälter bzw. eine Sammelverpackung eingebracht.

Der Transportbehälter, idealerweise ein Großkarton, kann Trennelemente, z.B. einen Stegsatz, aufweisen, der die verpackten Bruchstücke vor Beschädigungen schützt.

Als besonders vorteilhaft hat es sich erweisen, statt Trennelementen Kartons, idealerweise quaderförmige Kartons, einzusetzen. Diese Kartons sind vorzugsweise an die Größe der Verpackungsbeutel bzw. an Menge und Abmessungen des zu verpackenden polykristallinen Siliciums angepasst. Zu diesem Zweck ist es z.B. möglich die Verpackung des Polysiliziums in den Verpackungsbeutel innerhalb einer geeignet dimensionierten kontaminationsarmen Box vorzunehmen und den Verpackungsbeutel anschließend in einen Karton zu stecken. Die Box und der Karton sind in etwa gleich dimensioniert. Der Einsatz der Box hat den Vorteil, dass der Verpackungsbeutel bei der Befüllung bis zur abschließenden Verschweißung nicht mehr ausbeult.

Vorzugsweise werden die Verpackungsbeutel vor Befüllung mit Bruchstücken in die Kartons gesteckt.

Ebenso kann die Befüllung des Verpackungsbeutels außerhalb des Kartons erfolgen. In diesem Fall werden befüllten Verpackungsbeutel in den Karton gesteckt.

Diese Kartons werden anschließend in den Transportbehälter bzw. die Sammelverpackung überführt und ersetzen in diesem Fall die Trennelemente bzw. die Stegsätze.

Vorzugsweise weist der Karton eine seitliche ovale oder rechteckige Öffnung auf. Dies dient der leichteren Entnahme der Kartons aus dem Transportbehälter.

Vorzugsweise umfasst der Karton eine Aufreißspalte mit Verklebung oder Perforierung. Dies dient der leichteren Öffnung des Kartons beim Kunden. Dadurch kann verhindert werden, dass zur Entnahme der Verpackungsbeutel aus dem Karton diese an der Beutelfolie klemmend herausgezogen werden muss, was ein Durchstoßrisiko darstellt.

Vorzugsweise weist der Karton Ausschnitte oder Schlitze im Bereich der Kartonöffnung auf. Dies dient der Erleichterung des Einfaltvorgangs der Beutelenden im Karton, was zu einer Schonung der Beutelfolie und zu einer Reduzierung des Risikos von durch den Einfaltvorgang verursachten Durchstoßungen beiträgt.

Eine formschlüssige Verpackung des Materials kann durch eine geeignete einfaltbare Deckelkonstruktion am Karton erreicht werden.

Ebenso eignen sich keilförmige oder Halbschalenelemente, die sich an die Folie enthaltend polykristallines Silicium und an die Oberseite des Kartons oder an eine Seitenwand des Kartons anschmiegen. Das keilförmige Element besteht aus PU, z.B. PU-Schaum, oder aus Polyester. Ebenso eignet sich expandierbares Polystyrol.

Durch die Verwendung von Kartons werden etwaige Ausbauchungen des Transportbehälters, bei dem es sich z.B. um einen Großkarton handeln kann, durch verbesserte Stabilität im Vergleich zum Stegsatz, der keine Barriere zum Großkarton bietet, vermieden.

Somit sind die Bruchstücke ein- oder mehrfach in dünne, flexible und die Bruchstücke umschlingende Folien eingewickelt, wobei durch Einbringung eines zusätzlichen stabilisierenden Verpackungsbeutels, der eine Verstärkungsstruktur besitzt, oder durch formbildende Elemente eine zusätzliche Barriere gegen Durchstoßungen und Schnitte gegeben ist.

Die Bruchstück-Stabilisierung mit zusätzlichem speziellen Beutel erlaubt eine Reduzierung (bzw. den Wegfall) des Absaugungs-/Auspressvolumens der vom Beutel eingeschlossenen Luft vor dem Verschweißen der Verpackungsbeutel, da die ansonsten stabilisierende Wirkung der Volumenreduktion ganz oder teilweise bereits durch die zusätzlich eingebrachte stabilisierende Beutelfolie gewährleistet wird.

Durch die Reduzierung/Wegfall der Volumenreduktion wird beim Absaugen/Auspressen die Beutelfolie weniger stark gegen die potentiell scharfkantigen Bruchstückkanten gedrückt. Auch dies vermeidet Durchstoßungen.

Kommt es beim Transport der gefüllten Verpackungsbeutel dennoch zu Durchstoßungen des innen liegenden Verpackungsbeutels kann der zusätzliche spezielle Beutel (Folie mit Verstärkungsstruktur oder Folie mit Formbildendem Element) die Stabilisierung der Bruchstücke aufrechterhalten.

Der Karton und darin befindliche Verpackungsbeutel bieten folgende Vorteile:
Bruchstücke werden direkt auf die durch den Karton gestützte Beutelfolie gelegt. Dadurch wirkt die Gewichtskraft zu keiner Zeit allein auf die Beutelfolien.

Beim Handling des Verpackungsbeutels während des Einbringens in den Transportbehälter muss nicht an der Beutelfolie selbst, sondern nur am Karton gegriffen werden. Dadurch besteht kein Zug auf die Beutelfolie, was eine Gefahr von Durchstoßungen darstellen könnte. Dies gilt selbstverständlich auch beim Auspacken. Dadurch werden die Beutelfolien optimal geschont.

Durch die optimale Anpassung der Größe der Verpackungsbeutel an den Karton bleibt nach dem Stecken der Verpackungsbeutel in den Karton ohne besondere Vorkehrungen die Beutelöffnung für eine optimale Befüllung geöffnet. Im Gegensatz dazu müssten Flachbeutel für den Befüllungsvorgang durch geeignete Maßnahmen aufgehalten werden.

Statt speziell gefalteter, selbststehender Beutel, die aufwändiger in der Herstellung sind, kann auf einfach gefaltete und verschweißte Flachbeutel zurückgegriffen werden.

Die klar abgegrenzten geometrischen Abmessungen der Kartons wirken einer ansonsten unförmigen Befüllung der Verpackungsbeutel oder einer Überschreitung der max. Füllhöhe entgegen.

Im Transportbehälter wird das Volumen optimal genutzt und somit eine maximale Packungsdichte erreicht.

Bei unförmigen Verpackungsbeuteln kommt es im Transportbehälter trotz flexibler Stegsätze zu Engstellen (Stauchung) und Freiräumen, die zu gegenseitigen Durchstoßung der Verpackungsbeutel führen können bzw. zu starke Bewegungen der Verpackungsbeutel während des Transports (Schnitte, Abrieb Beutelfolie) erlauben. Dies vermeidet die erfindungsgemäße Lösung.

Mit definierten Kartonabmessungen werden Relativbewegungen zwischen Verpackungsbeutel und Karton weitgehend vermieden.

Der umgebende Karton bildet eine zusätzliche schützende Barriere zwischen den Verpackungsbeuteln.

Das Handling der Kartons ist leicht automatisierbar, beispielsweise durch Einsatz von Robotern mit einfachen Greifern oder durch Rollbahnen.

Es hat sich auch als vorteilhaft erwiesen, zusätzliche Trennelemente bzw. Bodenplatten mit 0,1-5 mm Dicke im Bodenbereich zwischen die Einzellagen der Verpackungsbeutel einzubringen. Die Trennelemente weisen vorzugsweise eine ovale oder eine rechteckige Form auf. Im Falle der rechteckigen Trennelemente sollten diese abgerundeten Ecken umfassen. Dies verhindert wirksam und dauerhaft, dass Bruchstücke durch beim Transport auftretende vertikal wirkende Schläge letztlich die äußerste Beutelfolienschicht durchdringen.

Vorzugsweise entspricht das Material des zusätzlichen stabilisierenden Beutels (Folie mit Verstärkungsstruktur) und des Trennelements bzw. der Bodenplatte dem Material der Verpackungsbeutel und besitzt eine vergleichbare Oberflächenreinheit. Dies ist hinsichtlich Entsorgung und Recycling von Vorteil.

Der zusätzlich stabilisierende Verpackungsbeutel (Folie mit Verstärkungsstruktur) kann auch als reine Folieneinlage ohne jegliche Verschweißung ausgeführt sein.

Bei der Befüllung des im Karton befindlichen Beutels mit Polysilicium wird dieser vorzugsweise schräg in einem Winkel von 15 bis 65° zu seiner Längsachse angestellt. Dies bietet ergonomische Vorteile.

Daneben wird beim manuellen Befüllen des Beutels vermieden, dass Bruchstücke seitlich in Richtung Kartonwand abrollen, was bei vertikaler Positionierung der Verpackung möglich ist und zu einer Ausbauchung des Kartons führen kann.

Auch wird vermieden, dass Bruchstücke wieder in Richtung Befüllöffnung abrollen, was bei rein horizontaler Befüllung möglich ist.

### Beispiel

In Versuchen mit je 2 Großverpackungen mit 32 Verpackungsbeuteln (Bruchstückmasse 200-3000 g) konnte die Durchstoßrate des außenliegenden Verpackungsbeutel von 31% ohne Karton und zusätzlichem stabilisierenden Beutel auf 5% mit Karton und zusätzlich stabilisierenden Beutel (Luftpolsterfolie, Rolamit^{®}) reduziert werden.

## Patentansprüche

1. Verpackung von polykristallinem Silicium, in Form eines oder mehrerer Bruchstücke oder eines oder mehrerer stabförmiger Rundlinge, umgeben von wenigstens einer 10 bis 1000 µm dicken Folie, die das polykristalline Silicium umschlingt, **dadurch gekennzeichnet, dass** diese wenigstens eine Folie von einer weiteren Folie mit einer Verstärkungsstruktur oder von einem formbildenden Element umgeben ist.

2. Verpackung von polykristallinem Silicium nach Anspruch 1, **dadurch gekennzeichnet, dass** es sich bei der Folie mit Verstärkungsstruktur, um eine Luftpolsterfolie oder um eine Rolamit^{®}-Folie handelt.

3. Verpackung von polykristallinem Silicium nach Anspruch 1, **dadurch gekennzeichnet, dass** das formbildenden Element aus PU, Polyester oder expandierbarem Polystyrol oder einen anderen Kunststoff besteht.

4. Verpackung von polykristallinem silicium nach einem der Ansprüche 1 bis 2, **dadurch gekennzeichnet, dass** sich zwischen zwei der Folien wenigstens ein ovales oder rechteckiges, und 0,1 bis 5 mm dickes Trennelement befindet.

5. Verfahren zum verpacken von polykristallinem Silicium nach einem der Ansprüche 1 bis 2 durch Verschweißen wenigstens einer der Folien und anschließendem Einbringen in einen Transportbehälter umfassend Trennelemente oder Kartons.

6. Verfahren zum verpacken von polykristallinem Silicium nach einem der Ansprüche 1 bis 2 durch Einbringen in einen Karton und anschließendem Verschweißen wenigstens einer der Folien.

7. Verfahren zur Verpackung von polykristallinem Silicium in Form von Bruchstücken oder stabförmigen Rundlingen, wobei jeweils wenigstens eine Folie in einen quaderförmigen, den Abmessungen des zu verpackenden polykristallinen Siliciums angepassten Karton gesteckt, das polykristalline Silcium in die wenigstens eine Folie eingeführt wird, wobei die wenigstens eine, 10 bis 1000 µm dicke Folie anschließend verschweißt wird und das polykristalline Silicium umschlingt, **dadurch gekennzeichnet, dass** diese wenigstens eine Folie von einer weiteren Folie mit einer Verstärkungsstruktur oder von einem formbildenden Element umgeben ist.

8. Verfahren nach Anspruch 7, **dadurch gekennzeichnet, dass** beim Einführen des polykristallinen Siliciums der Karton schräg in einem Winkel von 15-65° zu einer Längsachse des Kartons angestellt wird.

9. Verfahren nach einem der Ansprüche 7 bis 8, **dadurch gekennzeichnet, dass** sich zwischen zwei der Folien wenigstens ein ovales oder rechteckiges, 0,1 bis 5 mm dickes Trennelement befindet.

10. Verfahren nach einem der Ansprüche 7 bis 9, **dadurch gekennzeichnet, dass** Kartons enthaltend in wenigstens eine Folie eingeschweißtes polykristallines Silicium in einen Transportbehälter eingebracht werden.

11. Verfahren nach einem der Ansprüche 7 bis 10, **dadurch gekennzeichnet, dass** der Karton wenigstens eine seitliche Öffnung aufweist, der der leichteren Entnahme der Kartons aus dem Transportbehälter dient.

12. Verfahren nach einem der Ansprüche 7 bis 11, **dadurch gekennzeichnet, dass** der Karton eine Aufreißspalte mit Verklebung oder Perforierung umfasst.

13. Verfahren nach einem der Ansprüche 7 bis 12, **dadurch gekennzeichnet, dass** der Karton Ausschnitte oder Schlitze im Bereich der Kartonöffnung aufweist, in die Folienenden eingefaltet werden.

14. Verwendung von Rolamit^{®} zur Stabilisierung der Verpackung von polykristallinem Silicium nach einem der Ansprüche 1 bis 2, das in Form eines Bruchstücks oder eines stabförmigen Rundlings vorliegt, welches von wenigstens einer 10 bis 1000 µm dicken Folie, die das polykristalline Silicium umschlingt, umgeben ist.

15. Verwendung von Stretchfolie oder Wickelfolie oder Schrumpffolie zur Stabilisierung der Verpackung von polykristallinem Silicium nach einem der Ansprüche 1 bis 2, das in Form eines Bruchstücks oder eines stabförmigen Rundlings vorliegt, welches von wenigstens einer 10 bis 1000 µm dicken Folie, die das polykristalline Silicium umschlingt, umgeben ist.

16. Verwendung von keilförmigen oder Halbschalenelementen zur Stabilisierung der Verpackung von polykristallinem Silicium nach einem der Ansprüche 1 bis 2, wobei sich das polykristallines Silicium in wenigstens einer Folie befindet und sich die wenigstens eine Folie enthaltend polykristallines Silicium in einem Karton befindet, wobei sich keilförmige oder Halbschalenelemente an eine Oberseite des Kartons und/oder an eine Seitenwand des Kartons und an die wenigstens eine Folie enthaltend polykristallines Silicium anschmiegen.

## Claims

1. Packing of polycrystalline silicon in the form of one or more fragments or of one or more round rods, surrounded by at least one film of thickness 10 to 1000 µm which encloses the polycrystalline silicon, **characterized in that** this at least one film is surrounded by a further film having a reinforcing structure or by a shaping element.

2. Packing of polycrystalline silicon according to Claim 1, **characterized in that** the film with reinforcing structure is an air bubble film or a Rolamit^{®} film.

3. Packing of polycrystalline silicon according to Claim 1, **characterized in that** the shaping element consists of PU, polyester or expandable polystyrene, or another plastic.

4. Packing of polycrystalline silicon according to either of Claims 1 and 2, **characterized in that** at least one oval or rectangular separating element of thickness 0.1 to 5 mm is present between two of the films.

5. Method for packing polycrystalline silicon according to either of Claims 1 and 2 by welding at least one of the films, followed by introduction into a transport container comprising separating elements or cardboard boxes.

6. Method for packing polycrystalline silicon according to either of Claims 1 and 2 by introduction into a cardboard box, followed by welding of at least one of the films.

7. Method for packing polycrystalline silicon in the form of fragments or round rods, wherein at least one film in each case is inserted into a cuboidal cardboard box matched to the dimensions of the polycrystalline silicon to be packed, the polycrystalline silicon is introduced into the at least one film, the at least one film of thickness 10 to 1000 µm subsequently being welded and enclosing the polycrystalline silicon, **characterized in that** this at least one film is surrounded by a further film having a reinforcing structure or by a shaping element.

8. Method according to Claim 7, **characterized in that** the cardboard box on introduction of the polycrystalline silicon is positioned at an oblique angle of 15-65° to a longitudinal axis of the cardboard box.

9. Method according to either of Claims 7 and 8, **characterized in that** at least one oval or rectangular separating element of thickness 0.1 to 5 mm is present between two of the films.

10. Method according to any of Claims 7 to 9, **characterized in that** cardboard boxes containing polycrystalline silicon welded into at least one film are introduced into a transport container.

11. Method according to any of Claims 7 to 10, **characterized in that** the cardboard box has at least one lateral opening which serves for easier removal of the cardboard boxes from the transport container.

12. Method according to any of Claims 7 to 11, **characterized in that** the cardboard box has a tear strip with adhesive bonding or perforation.

13. Method according to any of Claims 7 to 12, **characterized in that** the cardboard box has cutouts or slots in the region of the cardboard box opening, and film ends are folded into these.

14. Use of Rolamit^{®} for stabilization of the packing of polycrystalline silicon according to either of Claims 1 and 2 in the form of a fragment or of a round rod, surrounded by at least one film of thickness 10 to 1000 µm which encloses the polycrystalline silicon.

15. Use of stretch film or wrapping film or shrink film for stabilization of the packing of polycrystalline silicon according to either of Claims 1 and 2 in the form of a fragment or of a round rod, surrounded by at least one film of thickness 10 to 1000 µm which encloses the polycrystalline silicon.

16. Use of wedge-shaped or half-shell elements for stabilization of the packing of polycrystalline silicon according to either of Claims 1 and 2, wherein the polycrystalline silicon is present in at least one film and the at least one film containing polycrystalline silicon is in a cardboard box, with wedge-shaped or half-shell elements nestling against an upper side of the cardboard box and/or against a side wall of the cardboard box and against the at least one film containing polycrystalline silicon.

## Revendications

1. Emballage de silicium polycristallin sous forme d'un ou de plusieurs fragments ou d'une ou plusieurs pièces rondes en forme de barre, entouré d'au moins un film de 10 à 1 000 µm d'épaisseur qui est enroulé autour du silicium polycristallin, **caractérisé en ce que** ce dit au moins un film est entouré d'un autre film ayant une structure de renforcement ou d'un élément donnant une forme.

2. Emballage de silicium polycristallin selon la revendication 1, **caractérisé en ce que** le film à structure de renforcement consiste en un film à bulles ou en un film de Rolamit^{®}.

3. Emballage de silicium polycristallin selon la revendication 1, **caractérisé en ce que** l'élément donnant une forme est constitué de PU, polyester ou polystyrène expansible ou d'une autre matière plastique.

4. Emballage de silicium polycristallin selon l'une quelconque des revendications 1 et 2, **caractérisé en ce qu'**au moins un élément séparateur ovale ou rectangulaire, de 0,1 à 5 mm d'épaisseur, se trouve entre deux des films.

5. Procédé pour l'emballage de silicium polycristallin selon l'une quelconque des revendications 1 et 2, par soudage d'au moins un des films et introduction subséquente dans un contenant de transport qui comprend des éléments séparateurs ou des cartons.

6. Procédé pour l'emballage de silicium polycristallin selon l'une quelconque des revendications 1 et 2, par introduction dans un carton et soudage subséquent d'au moins un des films.

7. Procédé pour l'emballage de silicium polycristallin sous forme de fragments ou de pièces rondes en forme de barre, dans lequel on introduit chaque fois au moins un film dans un carton parallélépipédique, adapté aux dimensions du silicium polycristallin à emballer, on introduit le silicium polycristallin dans ledit au moins un film, ledit au moins un film de 10 à 1 000 µm d'épaisseur étant ensuite sondé et enroulé autour du silicium polycristallin, **caractérisé en ce que** ce dit au moins un film est entouré d'un autre film ayant une structure de renforcement ou d'un élément donnant une forme.

8. Procédé selon la revendication 7, **caractérisé en ce que** lors de l'introduction du silicium polycristallin le carton est incliné en faisant un angle de 15-65° avec un axe longitudinal du carton.

9. Procédé selon l'une quelconque des revendications 7 et 8, **caractérisé en ce qu'**au moins un élément séparateur ovale ou rectangulaire, de 0,1 à 5 mm d'épaisseur, se trouve entre deux des films.

10. Procédé selon l'une quelconque des revendications 7 à 9, **caractérisé en ce qu'**on introduit dans un contenant de transport des cartons qui contiennent du silicium polycristallin enveloppé hermétiquement dans au moins un film.

11. Procédé selon l'une quelconque des revendications 7 à 10, **caractérisé en ce que** le carton comporte au moins une ouverture latérale qui permet de retirer plus facilement les cartons du contenant de transport.

12. Procédé selon l'une quelconque des revendications 7 à 11, **caractérisé en ce que** le carton comprend une fente de déchirage avec collage ou perforation.

13. Procédé selon l'une quelconque des revendications 7 à 12, **caractérisé en ce que** le carton comporte des entailles ou des encoches dans la zone d'ouverture du carton, dans lesquelles les extrémités des films sont insérées avec pliage.

14. Utilisation de Rolamit pour la stabilisation de l'emballage de silicium polycristallin selon l'une quelconque des revendications 1 et 2, qui se trouve sous forme d'un fragment ou d'une pièce ronde en forme de barre, qui est entouré(e) d'au moins un film de 10 à 1 000 µm d'épaisseur qui est enroulé autour du silicium polycristallin.

15. Utilisation de film étirable ou de film en rouleau ou de film rétractable pour la stabilisation de l'emballage de silicium polycristallin selon l'une quelconque des revendications 1 et 2, qui se trouve sous forme d'un fragment ou d'une pièce ronde en forme de barre, qui est entouré(e) d'au moins un film de 10 à 1 000 µm d'épaisseur qui est enroulé autour du silicium polycristallin.

16. Utilisation d'éléments en biseau ou en forme de demi-coquille pour la stabilisation de l'emballage de silicium polycristallin selon l'une quelconque des revendications 1 et 2, le silicium polycristallin se trouvant dans au moins un film et ledit au moins un film qui contient du silicium polycristallin se trouvant dans un carton, des éléments en biseau ou en forme de demi-coquille étant serrés contre une face supérieure du carton et/ou une paroi latérale du carton et contre ledit au moins un film contenant du silicium polycristallin.
